# EUROPÄISCHE PATENTSCHRIFT

(11) **EP 1 243 374 B1**
(45) Veröffentlichungstag und Bekanntmachung des Hinweises auf die Patenterteilung: **09.01.2008**
(21) Anmeldenummer: 01103273.7
(22) Anmeldetag: 13.02.2001
(51) Int. Cl.: B23K 31/02, B64C 3/00, B32B 15/04

(54) **Verfahren zum Herstellen einer Werkstückverbindung, insbesondere einer Verbindung einer Finnenaussenhaut mit einem Stringer**
Method of making a workpiece connection, particularly a workpiece connection of the outer skin of a fin with a stringer
Procédé de fabrication d'un joint de pièce à usiner, notamment joint de pièce à usiner d'une peau extérieure avec raidisseur

(43) Veröffentlichungstag der Anmeldung: 25.09.2002
(73) Patentinhaber: Deutsches Zentrum für Luft- und Raumfahrt e.V., 51147 Köln (DE)
(72) Erfinder: Petersen, Dieter, 38124 Braunschweig (DE); Hildebrandt, Bernd, 38162 Cremlingen (DE)
(74) Vertreter: Einsel, Martin

(56) Entgegenhaltungen:
- EP-A- 0 559 035
- DE-A- 4 424 718
- DE-C- 19 536 675
- DE-C- 19 844 035
- DE-C- 19 924 909
- US-A- 5 558 304
- US-A- 5 841 098
- PATENT ABSTRACTS OF JAPAN vol. 1999, no. 05, 31. Mai 1999 (1999-05-31) -& JP 11 047959 A (MITSUBISHI HEAVY IND LTD), 23. Februar 1999 (1999-02-23)

## Beschreibung

Die Erfindung betrifft ein Verfahren und eine Vorrichtung zum Herstellen einer Werkstückverbindung.

Eine derartige Werkstückverbindung kann insbesondere ein Teil einer Finne eines Flugzeuges sein, bei der ein als Außenfläche dienendes Blech aus Titan oder einer titanhaltigen Legierung mit einem innenliegenden Verstärkungsteil aus Titan, zum Beispiel einem Stringer, verbunden wird. Weiterhin können auch Werkstücke aus einem anderen Metall, wie zum Beispiel Aluminium, erfindungsgemäß verbunden werden.

Derartige Verbindungen sind während des Flugbetriebes hohen Belastungen ausgesetzt. Gleichzeitig sollen die verwendeten Bauteile, das Finnenaußenblech und das Verstärkungsteil, möglichst klein dimensioniert werden, um einen gewünschten Leichtbau verwirklichen zu können. Die Ausbildung einer geeigneten Verbindung ist somit problematisch. Wird die Verbindung durch eine Verschweißung des Verstärkungsteils und des Tragflächenbleches hergestellt, führt dies zu Strukturveränderungen und einer Schwächung des Tragflächenbleches. Klebeverbindungen halten den Beanspruchungen während des Flugbetriebes nicht stand. Bei Verwendung eines perforierten Bleches zur Verringerung von turbulenten Strömungen auf der Außenseite des Bleches werden in der Verbindungsfläche darüber hinaus die Durchgangslöcher verschlossen. Daher soll die benötigte Verbindungsfläche möglichst gering sein, was dazu führt, dass die in der Verbindung auftretenden Spannungen aufgrund der kleinen Verbindungsfläche relativ groß sind.

Der Erfindung liegt die Aufgabe zu Grunde, gegenüber dem Stand der Technik Verbesserung zu schaffen und insbesondere eine sichere und feste Verbindung zwischen dem Blech aus Titan oder einer titanhaltigen Legierung und dem Verstärkungsteil aus Titan oder einer titanhaltigen Legierung zu schaffen. Die Verbindung soll vorteilhafterweise verspannungsarm oder verspannungsfrei sein und geringe oder keine Oxideinschlüsse aufweisen. Das vorzuschlagende Verfahren soll weiterhin vorteilhafterweise mit relativ geringem Aufwand durchführbar und gut reproduzierbar sein. Außerdem soll eine Vorrichtung zur Durchführung dieses Verfahrens angegeben werden.

Die Aufgabe wird erfindungsgemäß bei einem Verfahren gelöst, indem das Blech aus Metall zwischen mindestens zwei Blechabdeckformen aus einem für Infrarot-Strahlung weitgehend durchlässigen Material gelegt wird, ein Verstärkungsteil aus Metall von mindestens einer Verstärkungsteilaufnahmen aufgenommen wird, das Blech und das Verstärkungsteil in einem mit einem Lot versehenen Verbindungsbereich gegeneinander gedrückt werden, und von mindestens einer Infrarot-Strahlungsquelle Infrarot-Strahlung über mindestens eine Blechabdeckform auf das Blech eingestrahlt wird.

Eine zur Durchführung dieses Verfahrens geeignete Vorrichtung zum Herstellen einer Werkstückverbindung, insbesondere eine Verbindung eines Finnenaußenblechs mit einem Stringer, besitzt mindestens zwei Blechabdeckformen aus einem für Infrarotstrahlung weitgehend durchlässigen Material, mindestens eine Verstärkungsteilaufnahme, einen Bereich, in dem ein Blech und ein Verstärkungsteil in einem mit einem Lot versehenen Verbindungsbereich gegeneinander gedrückt werden, und mindestens eine Infrarotstrahlungsquelle, mit der Infrarotstrahlung über zumindest eine Blechabdeckform auf das Blech eingestrahlt wird.

Hierbei können vorteilhafterweise auch die Verstärkungsteilaufnahmen aus einem für Infrarot-Strahlung weitgehend durchlässigen Material hergestellt sein.

Der Erfindung liegt der Gedanke zu Grunde, durch an das Blech angepasste transparente Blechabdeckformen zum einen eine großflächige, gleichmäßige Kraftübertragung auf das Blech und zum anderen eine direkte Heizung eines Lötbereiches zwischen dem Blech und dem Verstärkungsteil zu ermöglichen. Die durch die Infrarot-Strahlung zugeführte und absorbierte Energie wird durch Wärmeleitung und Wärmestrahlung über die Blechabdeckformen zu den beiden Seiten des Bleches hin gleichmäßig abgeführt, sodass relativ geringe Spannungen auf Grund von Temperaturgradienten auftreten. Indem als Material der Blechabdeckformen ein für Infrarot-Strahlung durchlässiges Glasmaterial gewählt wird, das eine relativ niedrige Wärmeleitfähigkeit besitzt, kann ein sehr geringer Temperaturgradient in dem Blech und dem Verstärkungsteil erreicht werden, sodass relativ geringe Spannungen in dem gelöteten Verbindungsbereich auf Grund von Temperaturgradienten bei der Herstellung auftreten. Weiterhin wird auf Grund der guten Wärmeisolierung eine relativ geringe Strahlungsleistung der Infrarot-Strahlungsquellen benötigt.
Wenn das Blech zumindest um den Verbindungsbereich herum plan ausgebildet ist, können entsprechend plane Blechabdeckplatten verwendet werden. Es ist jedoch auch eine Verwendung von Blechen mit komplexerer Formgebung möglich, indem entsprechend angepasste Blechabdeckformen verwendet werden, die bei der Produktion dieser Verbindungsanordnung wiederholt verwendet werden können.

Das Blech kann insbesondere ein als Außenblech einer Finne verwendbares Titanblech sein. Das Verstärkungsteil kann insbesondere ein in der Tragfläche angeordneter Stringer sein. Hierbei kann ein plan ausgebildeter Bereich des Stringers zusammen mit entsprechend dicken Distanzblechen zwischen zwei als Stringeraufnahmen dienenden Glasplatten aufgenommen werden, die mit den als Blechaufnahmeplatten dienenden Glasplatten verspannt werden können. Vorteilhafterweise kann jedoch ein Anpressdruck des Stringers auf das Blech auch durch die Gewichtskraft einer Stringeraufnahmeplatte erzeugt werden, die den Stringer nach oben hin abdeckt. In diesem Fall wird somit der Stringer von oben auf dem liegenden Blech befestigt.

Erfindungsgemäß kann lediglich eine Infrarot-Strahlungsquelle verwendet werden, die zum Beispiel das Blech von einer Seite beheizt. Um die hierbei entstehenden Temperaturgradienten im Blech in Richtung der Blechdicke und entsprechende Temperaturgradienten im Verbindungsbereich mit dem Verstärkungsteil zu verringern, kann die Infrarot-Einstrahlung auch von seitlicher Richtung her durch die Glasscheiben direkt auf den Verbindungsbereich, oder vorteilhafterweise durch zwei oder mehr Infrarot-Strahlungsquellen erfolgen, die die Verbindungsanordnung von den beiden gegenüberliegenden Seiten des Bleches her heizen. Hierdurch wird ein Temperaturgradient entlang der Blechdicke gering gehalten oder sogar eliminiert, so dass beim Löten auftretende Verspannungen verringert sind.

Zur Auslesung der Temperatur kann ein Thermoelement verwendet werden, dass sich entlang des Bleches, zum Beispiel in einer Aussparung einer Blechabdeckplatte erstreckt und an seinem Ende über eine Leitung ausgelesen wird. Seine Signale können über eine Leitung von außen ausgelesen werden. Hierbei kann zum Beispiel eine Kante einer Blechabdeckplatte etwas abgeschrägt sein, um einen Freiraum zur Aufnahme des Thermoelementes zu schaffen. Alternativ hierzu sind auch andere Möglichkeiten einer Temperaturbestimmung, zum Beispiel auch mittels einer optischen Temperaturauslesung durch eine transparente Blechabdeckform, grundsätzlich möglich.

Da der zu lötende Verbindungsbereich erfindungsgemäß zwischen den Blechabdeckformen und gegebenenfalls Verstärkungsteilaufnahmen weitgehend luftdicht abgeschirmt werden kann, kann die Verlötung grundsätzlich ohne Verwendung eines Schutzgases durchgeführt werden, da lediglich zwischen den Formen beziehungsweise Platten verbleibender restlicher Sauerstoff zur Oxidation des Lötmittels beiträgt. Es kann jedoch auch ein Lötvorgang unter Verwendung eines Schutzgases, insbesondere Argon, vorgenommen werden. Hierbei kann in der im Verbindungsbereich vorgesehenen Blechabdeckform ein entsprechender Kanal beziehungsweise Schutzgaskanal ausgebildet sein, der nach außen hin durch die Blechabdeckformen abgedichtet ist. Somit kann das Schutzgas durch eine separate Zuführung oder durch den Kanal zugeführt und über den Kanal von den Lötstellen weg nach außen abgeführt werden oder diffundieren. Das Schutzgas kann jedoch auch zum Beispiel seitlich von dem Blech zugeführt werden und zu dem Verbindungsbereich diffundieren. Hierzu ist vorteilhafterweise die erfindungsgemäße Anordnung im Wesentlichen abgedichtet, zum Beispiel durch eine auf dem Verstärkungsteil liegende Verstärkungsaufnahmeplatte und seitliche Führungen. Hierdurch kann der Durchsatz des verwendeten Argons deutlich reduziert werden, sodass nicht ein großflächiges Argonbad oder aufwendige Vakuumapparaturen verwendet werden müssen.

Da erfindungsgemäß eine kleine Verbindungsfläche erzeugt werden kann, kann insbesondere ein perforiertes, zum Beispiel mikroperforiertes Blech verwendet werden. Hierbei können die Blechabdeckformen als Führungen für das Verstärkungsteil dienen, um ein seitliches Wegkippen zu verhindern.

Erfindungsgemäß können durch Verwendung entsprechender Abdeckformen auch großflächige Bereiche verlötet werden, wobei der Lötvorgang mit relativ wenig Strahlungsenergie in kurzer Zeit bewerkstelligt werden kann.

Die Erfindung wird im Folgenden anhand der beiliegenden Zeichnungen an einigen Ausführungsformen näher erläutert. Es zeigen:
- **Figur 1**: einen Schnitt durch eine Vorrichtung zum Durchführen eines Verfahrens gemäß einer ersten Ausführungsform der Erfindung;
- **Figur 2**: einen entsprechenden Schnitt durch eine Vorrichtung zum Durchführen eines Verfahrens gemäß einer weiteren Ausführungsform der Erfindung.
- **Figur 3a, b**: einen Schnitt und eine Draufsicht auf eine Vorrichtung zum Durchführen eines Verfahrens gemäß einer weiteren Ausführungsform der Erfindung.

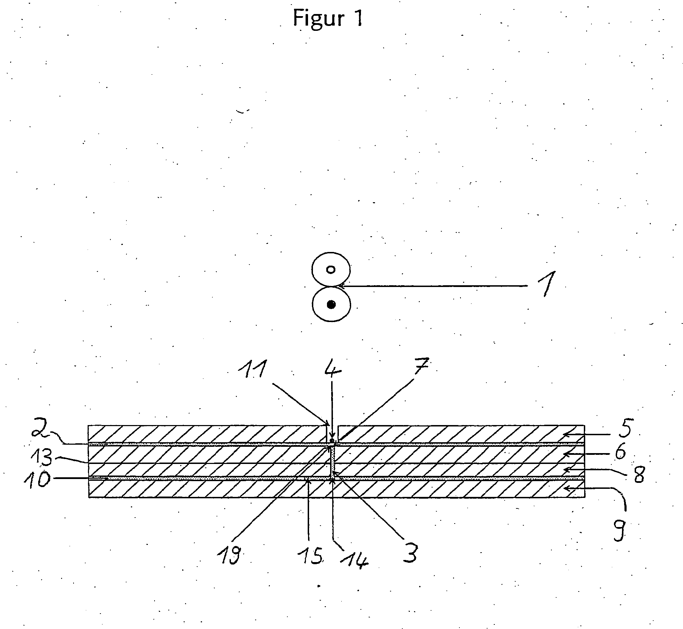

Gemäß **Figur 1** wird ein als Außenblech einer Finne dienendes Titanblech 2 mit einem Stringer 3 aus Titan in einem Verbindungsbereich 19 durch ein Aluminiumlot 7 verbunden. Das Titanblech 2 ist zwischen einer oberen Blechabdeckpatte 5 und einer unteren Blechabdeckplatte 6 aufgenommen beziehungsweise eingespannt. Hierbei kann die obere Blechabdeckplatte 5 bei der Ausführungform der Figur 1 mit einem Freiraum 11 ausgebildet sein, in dem ein Thermoelement 4 vorgesehen ist.

Der Stringer 3 weist einen vertikalen Bereich 14 und einen hierzu orthogonal angeordneten horizontalen Bereich 15 auf, der von einer oberen Stringeraufnahmeplatte 8 und einer unteren Stringeraufnahmeplatte 9 aufgenommen beziehungsweise eingeklemmt wird. Hierbei sind seitlich neben dem horizontalen Bereich 15 Distanzbleche 10 vorgesehen, um ein Verkippen der Platten 8, 9 zu vermeiden. Der vertikale Bereich 14 verläuft durch die obere Stringeraufnahmeplatte 8 und die untere Blechabdeckplatte 6. Das Aluminiumlot 7 kann insbesondere als Aluminiumfolie am Ende des vertikalen Bereiches 14 vorgesehen werden. Hierbei kann eine Aluminiumfolie mit einem Reinheitsgrad von windestens 99 %, oder eine andere geeignete Aluminiumfolie verwendet werden.

Eine Infrarot-Strahlungsquelle, die insbesondere als IR-Hellstrahler Infrarot-Strahlung im kurzwelligen Infrarotspektrum von 0,78 µm bis 1,40 µm ausstrahlen kann, ist oberhalb der beschriebenen Anordnung vorgesehen. Eine Infrarot-Strahlung wird dem Verbindungsbereich über die obere Blechabdeckplatte 5 zugeführt. Zwischen den Glasplatten 6 und 8 kann weiterhin ein Aluminiumreflektor 13 vorgesehen sein. Hierdurch kann Wärmestrahlung, die von dem erhitzten Blech 2 ausgestrahlt wird, wieder zu dem Blech zurückreflektiert werden, so dass eine gute Wärmeisolierung und gleichmäßige Aufheizung des Titanbleches und des Verstärkungsbereiches erfolgt.

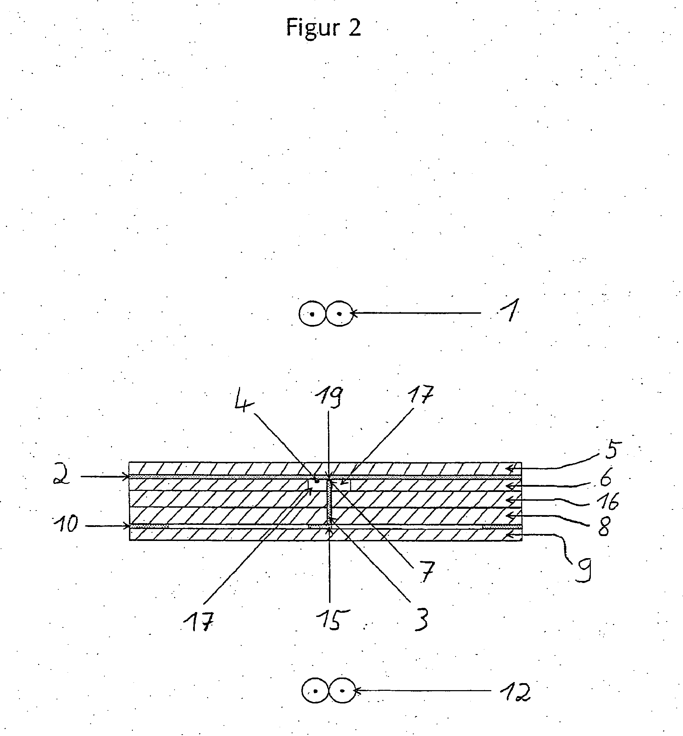

Bei der Ausführungsform der **Figur 2** wird zusätzlich eine zweite Infrarot-Strahlungsquelle 12 verwendet, die insbesondere auch als IR-Hellstrahler ausgebildet sein kann. Hierbei ist weiterhin ein Kanal 17 in der unteren Blechabdeckplatte 6 vorgesehen, in dem ein Thermoelement 4 vorgesehen ist.

Durch den Kanal 17 kann Schutzgas zu- und abgeführt werden. Dieser Kanal kann direkt an eine Schutzgasquelle angeschlossen werden, sodass er gleichmäßig von Schutzgas durchströmt wird.

Die untere Blechabdeckplatte 6 kann insbesondere zweiteilig ausgebildet sein und zwischen den beiden Teilen den Kanal 17 freigeben. In diesem Fall kann eine als Glasplatte ausgebildete Zwischenplatte 16 unterhalb der unteren Blechabdeckplatte vorgesehen sein, um den Kanal nach unten hin zu verschließen.

Bei beiden Ausführungsformen werden zumindest die obere Blechabdeckplatte 5 und die untere Stringeraufnahmeplatte 9 gegeneinander verspannt, sodass der Stringer 3 gegen das Titanblech 2 gedrückt wird. Die Strahlungsleistung der Infrarotquelle 1 beziehungsweise der beiden Infrarotquellen 1 und 12 wird in Abhängigkeit von der gemessenen Temperatur geregelt, sodass eine gleichmäßige Temperatur von zum Beispiel 650-750 Grad Celsius erreicht wird, die zu einer sicheren Lötverbindung im Verbindungsbereich 19 führt.

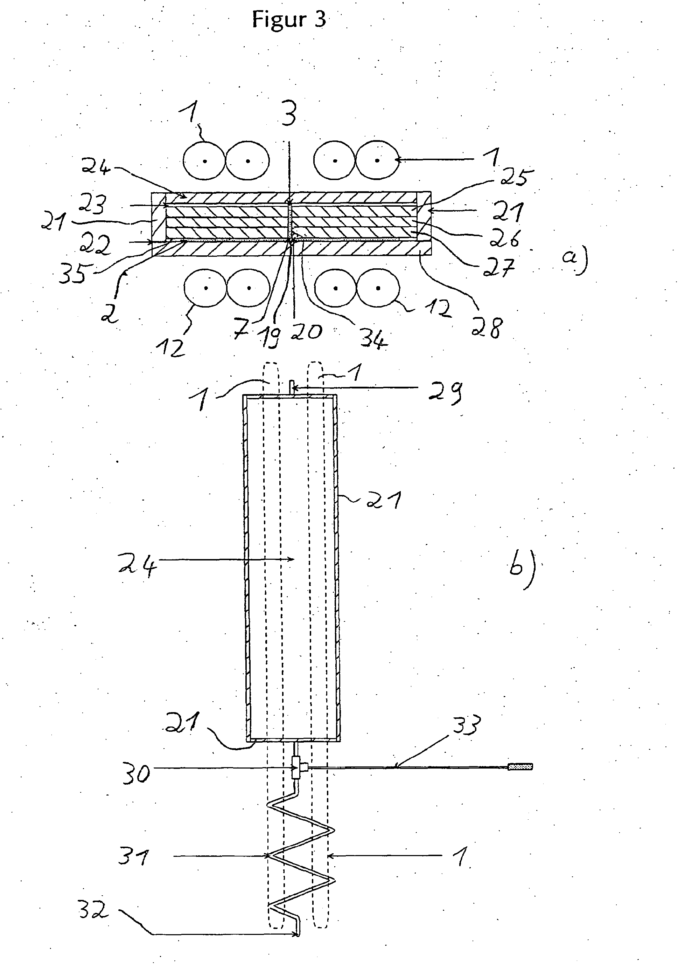

Die **Figuren 3a, 3b** zeigen eine weiteren Ausführungsform. Hierbei ist der Stringer zum Beispiel als längliche Platte ausgebildet und gemäß Figur 3 a von oben mit einer Kante in dem Verbindungsbereich auf das Blech 2 gesetzt. Unterhalb des Bleches 2 ist eine untere Blechabdeckplatte 28 vorgesehen, die obere Abdeckung des Bleches 2 erfolgt über zwei obere Blechabdeckplatten 27, die zwischen sich den Stringer 3 aufnehmen. Gemäß Figur 3 a können zwei Blechabdeckplatten 26 und 25 auf der Blechabdeckplatte 27 aufliegen und eine Führung für den Stringer 3 bilden. Die Blechabdeckplatten 25, 26, 27 werden von seitlichen Platten 21 begrenzt, die mittels wärmebeständigen Klebstoffes 22 an der unteren Blechabdeckplatte 28 befestigt sind. Auf dem Stringer 3 ruht eine Verstärkungsteilaufnahmeplatte 24. Sie ist vorteilhafterweise passgenau zwischen die seitlichen Platten 21 eingesetzt. Sämtliche Platten 25, 26, 27, 28, 21, 24 sind aus einem für Infrarot-Strahlung transparenten Material, insbesondere Glasmaterial hergestellt. Somit wird ein Ofen aus für Infrarot-Strahlung durchlässigem Material gebildet.

Da die Verstärkungsteilaufnahmeplatte 24 lediglich von den seitlichen Platten 21 geführt wird, drückt sie mit ihrem Gewicht den Stringer 3 gegen das Blech 2, so dass ein hinreichender Anpressdruck erreicht wird. Dieser Anpressdruck kann gegebenenfalls durch äußere Stempel, die an den Infrarot-Strahlern vorbei geführt werden, noch verstärkt werden. Infrarot-Strahlung wird über obere Infrarot-Strahlungsquellen 1 und untere Infrarot-Strahlungsquellen 12 gleichmäßig und symmetrisch zugeführt.

Schutzgas kann direkt in einen Freiraum 34 oder über Zuführkanäle 35, die seitlich neben dem Blech 2 ausgebildet sind, zugeführt werden. Dieses Schutzgas kann insbesondere Argon sein, das schwerer als die in der Anordnung verbleibende Luft, insbesondere auch der Sauerstoff ist. Das Schutzgas kann durch die gezeigte Anordnung diffundieren. Es gelangt zu dem Verbindungsbereich 19, in dem Aluminiumlot vorgesehen ist. Anschließend kann das Schutzgas zwischen dem Stringer 3 und den Blechabdeckplatten 27, 26, 25 nach oben diffundieren. Da die Verstärkungsteilaufnahmeplatte bzw. Stringeraufnahmeplatte 24 frei auf dem Stringer 3 ruht, verbleibt ein Freiraum 23 zwischen der Stringerabdeckplatte 24 und der Blechabdeckplatte 25, der zur Abführung des Schutzgases verwendet werden kann. In diesem Fall kann gemäß Figur 3 b seitlich ein Schutzgasauslassrohr 29 vorgesehen sein, das ggf. mit einem Überdruckventil ausgebildet sein kann. Weiterhin kann das Schutzgas auch durch leichtes Abheben der Stringeraufnahmeplatte 24 nach oben gelangen bzw. seitlich neben der Stringeraufnahmeplatte 24 nach oben weg diffundieren. In diesem Fall kann das Schutzgasauslassrohr 26 mit Überdruckventil lediglich als Sicherheitsmaßnahme dienen.

Die Zuführung des Schutzgases kann gemäß Figur 3 b über einen Gaseinlass 32, eine Heizspirale 31 aus zum Beispiel Kupfer sowie ein Gasanschlussstück 30, das insbesondere als Heißgasanschlussstück aus Quarzglas ausgebildet sein kann, erfolgen. Die Erhitzung der Heizspirale kann hierbei über die Infrarot-Strahler erfolgen. Durch die Zuführung des erwärmten Schutzgases werden zusätzlich zu der vorzugsweise beidflächigen und vollflächigen Bestrahlung des Ofens Temperaturgradienten verringert oder vermieden.

Ein Thermoelement 20 kann gemäß Figur 3 a in unmittelbarer Nähe des Verbindungsbereiches in dem Freiraum 34 vorgesehen sein. Hierzu kann eine der Blechabdeckplatten 27 an ihrer unteren Kante leicht abgeschrägt sein und den Freiraum 34 mit zum Beispiel dreieckigem Querschnitt frei lassen. In diesem Freiraum 34 wird das Thermoelement 20 aufgenommen, das sich über eine gewünschte Länge des Bleches 2 und des Stringers 3 hin erstrecken kann. Die Auslesung erfolgt gemäß Figur 3 b über eine aus der Anordnung geführte Leitung 33.

Bei dieser Ausführungsform können alle Flächen mit Schutzgas umspült werden und somit Anlauffarben vermieden werden. Es ist eine Verspannung aller Teile möglich, so dass beim Verlöten die Teile in der beabsichtigten Form gehalten werden. Die Montage kann vor dem Lötvorgang im von oben offenen Ofen erfolgen.

### Bezugszeichenliste

- 1.: Infrarot-Strahler
- 2.: Titanblech
- 3.: Stringer
- 4.: Thermoelement
- 5.: obere Blechabdeckplatte
- 6.: untere Blechabdeckplatte
- 7.: Lot
- 8.: obere Stringeraufnahmeplatte
- 9.: untere Stringeraufnahmeplatte
- 10.: Distanzblech

- 11.: Freiraum
- 12.: Infrarot-Strahler
- 13.: Reflektor
- 14.: vertikaler Bereich
- 15.: horizontaler Bereich
- 16.: Zwischenplatte
- 17.: Kanal
- 18.:
- 19.: Verbindungsbereich

- 20.: Thermoelement
- 21.: seitliche Platten
- 22.: wärmebeständiger Klebstoff
- 23.: Spalt
- 24.: Verstärkungsteilaufnahme
- 25.: Blechabdeckplatten
- 26.: Blechabdeckplatten
- 27.: Blechabdeckplatten
- 28.: untere Blechabdeckplatten
- 29.: Schutzgasauslassrohr
- 30.: Anschlussstück
- 31.: Heizspirale
- 32.: Gaseinlass
- 33.: Anschlussleitung für Thermoelement
- 34.: Freiraum
- 35.: Zuführkanal

## Patentansprüche

1. Verfahren zum Herstellen einer Werkstückverbindung, insbesondere einer Verbindung eines Finnenaußenblechs mit einem Stringer, bei dem
ein Blech (2) aus einem Metall zwischen mindestens zwei Blechabdeckformen (5, 6; 27,28) aus einem für Infrarot-Strahlung weitgehend durchlässigen Material gelegt wird,
ein Verstärkungsteil (3) aus einem Metall von mindestens einer Verstärkungsteilaufnahme (8, 9; 24) aufgenommen wird,
das Blech und das Verstärkungsteil (3) in einem mit einem Lot (7) versehenen Verbindungsbereich (19) gegeneinander gedrückt werden, und
von mindestens einer Infrarot-Strahlungsquelle (1, 12) Infrarot-Strahlung über zumindest eine Blechabdeckform (5, 6) auf das Blech (2) eingestrahlt wird.

2. Verfahren nach Anspruch 1,
**dadurch gekennzeichnet,**
**dass** auch die Verstärkungsteilaufnahme (8, 9; 24) aus einem für Infrarot-Strahlung weitgehend durchlässigen Material hergestellt ist.

3. Verfahren nach Anspruch 1 oder 2,
**dadurch gekennzeichnet,**
**dass** das Metall des Bleches und des Verstärkungsteils Titan oder eine titanhaltige Legierung ist.

4. Verfahren nach Anspruch 3,
**dadurch gekennzeichnet,**
**dass** das Lot ein Aluminium-Lot (7), vorzugsweise eine Aluminium-Folie mit mindestens 99 % Aluminium, ist.

5. Verfahren nach einem der vorherigen Ansprüche,
**dadurch gekennzeichnet,**
**dass** das für Infrarot-Strahlung weitgehend durchlässige Material der Blechabdeckformen (5,6;25,26,27,28), vorzugsweise auch der Verstärkungsteilaufnahmen (8, 9;24), ein Glasmaterial ist.

6. Verfahren nach einem der vorherigen Ansprüche,
**dadurch gekennzeichnet,**
**dass** von einer oder mehreren Infrarot-Strahlungsquellen Infrarot-Strahlung aus einer seitlichen Richtung zwischen das Blech (2) und das Verstärkungsteil (3), vorzugsweise direkt auf den Verbindungsbereich (19), eingestrahlt wird.

7. Verfahren nach einem der vorherigen Ansprüche,
**dadurch gekennzeichnet,**
**dass** das Blech (2) zumindest um den Verbindungsbereich (19) herum plan ausgebildet ist und die Blechabdeckformen als plane Blechabdeckplatten (5, 6; 27,28) ausgebildet sind.

8. Verfahren nach einem der vorherigen Ansprüche,
**dadurch gekennzeichnet,**
**dass** das Verstärkungsteil zwischen mindestens zwei Verstärkungsteilaufnahmen (8,9) aufgenommen ist.

9. Verfahren nach Anspruch 8,
**dadurch gekennzeichnet,**
**dass** die Verstärkungsteilaufnahmen als plane Verstärkungsteilaufnahmeplatten (8, 9) ausgebildet sind, die einen planen Verstärkungsteilbereich (15) des Verstärkungsteils (3) und ein oder mehrere Distanzbleche (10) zwischen sich aufnehmen.

10. Verfahren nach einem der vorherigen Ansprüche,
**dadurch gekennzeichnet,**
**dass** in zumindest einer Biechaufnahmeform (6) ein Kanal (17) zur Zuführung und Abführung eines Schutzgases, vorzugsweise Argon, zu dem Verbindungsbereich (19) ausgebildet ist.

11. Verfahren nach Anspruch 10,
**dadurch gekennzeichnet,**
**dass** eine untere Blechabdeckform (6) zweiteilig ausgebildet ist und den Kanal (17) frei lässt.

12. Verfahren nach einem der vorherigen Ansprüche,
**dadurch gekennzeichnet,**
**dass** eine Verstärkungsteilaufnahme (24) gegen ein Ende des Verstärkungsteils (3) drückt und zwischen der Verstärkungsteilaufnahme (24) und einer Blechabdeckform (25,26,27) ein Zwischenraum (23) zur Abführung eines Schutzgases vorgesehen ist.

13. Verfahren nach Anspruch 12,
**dadurch gekennzeichnet,**
**dass** seitliche Führungen, vorzugsweise seitliche Platten (21) aus einem für Infrarot-Strahlung durchlässigen Material, zur Aufnahme der Blechabdeckform (25,26,27) und der Verstärkungsteilaufnahme (24) vorgesehen sind.

14. Verfahren nach Anspruch 13,
**dadurch gekennzeichnet,**
**dass** die seitlichen Führungen (21) den Zwischenraum (23) seitlich abgrenzen.

15. Verfahren nach einem der vorherigen Ansprüche,
**dadurch gekennzeichnet,**
**dass** die Blechabdeckform mehrere übereinandergelegte Blechabdeckplatten (25,26,27) aufweist.

16. Verfahren nach einem der vorherigen Ansprüche,
**dadurch gekennzeichnet,**
**dass** ein Anpressdruck des Verstärkungsteils (3) gegen das Blech (2) durch die Gewichtskraft einer Verstärkungsteilaufnahme (24) erzeugt wird.

17. Verfahren nach einem der Ansprüche 1 bis 15,
**dadurch gekennzeichnet,**
**dass** ein Anpressdruck des Verstärkungsteils (3) gegen das Blech (2) durch Verspannen einer Verstärkungsteilaufnahme (9) gegen eine Blechabdeckform (5) erzeugt wird.

18. Verfahren nach einem der vorherigen Ansprüche,
**dadurch gekennzeichnet,**
**dass** eine Temperatur des Bleches (2) und/oder des Verstärkungsteils (3) im Verbindungsbereich gemessen wird.

19. Verfahren nach Anspruch 18,
**dadurch gekennzeichnet,**
**dass** ein Thermoelement (20) verwendet wird, das über eine Leitung (33) ausgelesen wird.

20. Verfahren nach Anspruch 18 oder 19,
**dadurch gekennzeichnet,**
**dass** eine Intensität der eingestrahlten Infrarot-Strahlung in Abhängigkeit von der gemessenen Temperatur geregelt wird.

21. Verfahren nach einem der vorherigen Ansprüche,
**dadurch gekennzeichnet,**
**dass** das Blech perforiert, vorzugsweise mikroperforiert, ist.

22. Verfahren nach einem der vorherigen Ansprüche,
**dadurch gekennzeichnet,**
**dass** das Blech ein Außenblech (2) einer Finne eines Flugzeuges oder ein Tragflächenblech eines Flugzeuges, und das Verstärkungsteil ein Stringer (3) ist.

23. Vorrichtung zum Herstellen einer Werkstückverbindung, insbesondere einer Verbindung eines Finnenaußenblechs mit einem Stringer, mit einem Verfahren nach einem der vorstehenden Ansprüche,
mit mindestens zwei Blechabdeckformen (5, 6; 27,28) aus einem für Infrarot-Strahlung weitgehend durchlässigen Material,
mit mindestens einer Verstärkungsteilaufnahme (8, 9; 24), mit einem Bereich, in dem ein Blech (2) und ein Verstärkungsteil (3) in einem mit einem Lot (7) versehenen Verbindungsbereich (19) gegeneinander gedrückt werden, und
mit mindestens einer Infrarot-Strahlungsquelle (1, 12), mit der Infrarot-Strahlung über zumindest eine Blechabdeckform (5, 6) auf das Blech (2) eingestrahlt wird.

24. Vorrichtung nach Anspruch 23,
**dadurch gekennzeichnet,**
**dass** auch die Verstärkungsteilaufnahme (8, 9; 24) aus einem für Infrarot-Strahlung weitgehend durchlässigen Material hergestellt ist.

## Claims

1. Method for forming a workpiece connection, in particular a connection of an external sheet of a fin with a stringer, in which
a sheet (2) made of a metal is placed between at least two sheet metal covering profiles (5, 6; 27, 28) made of a material that is substantially transparent to infrared radiation,
a stiffener (3) made of a metal is received by at least one stiffener receiving means (8, 9; 24),
the sheet and the stiffener (3) are pressed against one another in a connection area (19) provided with a solder (7), and
infrared radiation from at least one infrared radiation source (1, 12) is radiated onto the sheet (2) via at least one sheet metal covering profile (5, 6).

2. Method according to claim 1, **characterised in that** the stiffener receiving means (8, 9; 24) is also made of a material, which is substantially transparent to infrared radiation.

3. Method according to claim 1 or 2, **characterised in that** the metal of the sheet and the stiffener is titanium or an alloy containing titanium.

4. Method according to claim 3, **characterised in that** the solder is an aluminium solder (7), preferably an aluminium foil with at least 99% aluminium.

5. Method according to one of the preceding claims, **characterised in that** the material of the sheet metal covering profiles (5, 6; 25, 26, 27, 28), preferably also of the stiffener receiving means (8, 9; 24), which is substantially transparent to infrared radiation, is a glass material.

6. Method according to one of the preceding claims, **characterised in that** infrared radiation from one or more infrared radiation sources is radiated from a lateral direction between the sheet (2) and the stiffener (3), preferably directly onto the connection area (19).

7. Method according to one of the preceding claims, **characterised in that** the sheet (2) is plane in configuration at least around the connection area (19) and the sheet metal covering profiles are configured as plane sheet metal covering panels (5, 6; 27, 28).

8. Method according to one of the preceding claims, **characterised in that** the stiffener is received at least between two stiffener receiving means (8, 9).

9. Method according to claim 8, **characterised in that** the stiffener receiving means are configured as plane stiffener receiving panels (8, 9), which receive a plane stiffener area (15) of the stiffener (3) and one or more spacer sheets (10) between them.

10. Method according to one of the preceding claims, **characterised in that** a duct (17) is configured in at least one sheet metal receiving profile (6) for the supply and discharge of a protective gas, preferably argon, to the connection area (19).

11. Method according to claim 10, **characterised in that** a lower metal sheet covering profile (6) is configured in two parts and leaves the duct (17) open.

12. Method according to one of the preceding claims, **characterised in that** a stiffener receiving means (24) presses against an end of the stiffener (3) and an interstice (23) is provided between the stiffener receiving means (24) and a metal sheet covering profile (25, 26, 27) for discharge of a protective gas.

13. Method according to claim 12, **characterised in that** lateral guides, preferably lateral panels (21) made of a material transparent to infrared radiation, are provided to receive the sheet metal covering profile (25, 26, 27) and the stiffener receiving means (24).

14. Method according to claim 13, **characterised in that** the lateral guides (21) laterally delineate the interstice (23).

15. Method according to one of the preceding claims, **characterised in that** the sheet metal covering profile comprises a plurality of sheet metal covering panels (25, 26, 27) placed one on top of the other.

16. Method according to one of the preceding claims, **characterised in that** a contact pressure of the stiffener (3) against the sheet (2) is produced by the weight of a stiffener receiving means (24).

17. Method according to one of claims I to 15, **characterised in that** a contact pressure of the stiffener (3) against the sheet (2) is produced by holding a stiffener receiving means (9) against a sheet metal covering profile (5).

18. Method according to one of the preceding claims, **characterised in that** a temperature of the sheet (2) and/or the stiffener (3) is measured in the connection area.

19. Method according to claim 18, **characterised in that** a thermoelement (20) is used, which is read by means of a line (33).

20. Method according to claim 18 or 19, **characterised in that** an intensity of the radiated infrared radiation is controlled as a function of the measured temperature.

21. Method according to one of the preceding claims, **characterised in that** the sheet is perforated, preferably micro-perforated.

22. Method according to one of the preceding claims, **characterised in that** the sheet is an external sheet (2) of a fin of an aircraft or a wing sheet of an aircraft, and the stiffener is a stringer (3).

23. Device for forming a workpiece connection, in particular a connection of an external sheet of a fin with a stringer, with a method according to one of the preceding claims,
with at least two sheet metal covering profiles (5, 6; 27, 28) made of a material that is substantially transparent to infrared radiation,
with at least one stiffener receiving means (8, 9; 24) with an area, in which a sheet (2) and a stiffener (3) are pressed against one another in a connection area (19) provided with a solder (7), and
with at least one infrared radiation source (1, 12), with which infrared radiation is radiated onto the sheet (2) via at least one sheet metal covering profile (5, 6).

24. Device according to claim 23, **characterised in that** the stiffener receiving means (8, 9; 24) is also made of a material, which is substantially transparent to infrared radiation.

## Revendications

1. Procédé de fabrication d'un joint de pièce à usiner, en particulier d'un joint d'une tôle extérieure d'empennage avec un raidisseur, dans le cadre duquel
une tôle (2) constituée d'un métal est placée entre au moins deux formes de recouvrement de tôle (5, 6 ; 27, 28) constituées d'un matériau en grande partie perméable au rayonnement infrarouge,
une pièce de renfort (3) constituée d'un métal est reçue par au moins un logement de pièce de renfort (8, 9 ; 24),
la tôle et la pièce de renfort (3) sont pressées l'une contre l'autre dans une zone de liaison (19) pourvue d'une soudure (7), et
un rayonnement infrarouge est diffusé par au moins une source de rayonnement infrarouge (1, 12) sur la tôle (2) en passant par au moins une forme de recouvrement de tôle (5, 6).

2. Procédé selon la revendication 1,
**caractérisé en ce**
**que** le logement de pièce de renfort (8, 9 ; 24) est également fabriqué dans un matériau en grande partie perméable au rayonnement infrarouge.

3. Procédé selon la revendication 1 ou 2,
**caractérisé en ce**
**que** le métal de la tôle et de la pièce de renfort est du titane ou un alliage contenant du titane.

4. Procédé selon la revendication 3,
**caractérisé en ce**
**que** la soudure est une soudure d'aluminium (7), de préférence une feuille d' aluminium comprenant au moins 99 % d'aluminium.

5. Procédé selon l'une quelconque des revendications précédentes,
**caractérisé en ce**
**que** le matériau, en grande partie perméable au rayonnement infrarouge, des formes de recouvrement de tôle (5, 6 ; 25, 26, 27, 28), de préférence aussi des logements de pièce de renfort (8, 9 ; 24) est un matériau en verre.

6. Procédé selon l'une quelconque des revendications précédentes,
**caractérisé en ce**
**qu'**un rayonnement infrarouge est diffusé par une ou plusieurs sources de rayonnement infrarouge depuis une direction latérale entre la tôle (2) et la pièce de renfort (3), de préférence directement sur la zone de liaison (19).

7. Procédé selon l'une quelconque des revendications précédentes,
**caractérisé en ce**
**que** la tôle (2) est réalisée de manière plane au moins autour de la zone de liaison (19) et les formes de recouvrement de tôle sont conçues comme des plaques de recouvrement de tôle planes (5, 6 ; 27, 28).

8. Procédé selon l'une quelconque des revendications précédentes,
**caractérisé en ce**
**que** la pièce de renfort est reçue entre au moins deux logements de pièce de renfort (8, 9).

9. Procédé selon la revendication 8,
**caractérisé en ce**
**que** les logements de pièces de renfort sont conçus comme des plaques de logement de pièce de renfort planes (8, 9), lesquelles reçoivent entre elles une zone plane (15) de la pièce de renfort (3) et une ou plusieurs tôles d'écartement (10).

10. Procédé selon l'une quelconque des revendications précédentes,
**caractérisé en ce que**
dans au moins une forme de logement de tôle (6) est réalisé un canal (17) destiné à alimenter et à évacuer un gaz inerte, de préférence de l'argon, vers la zone de liaison (19).

11. Procédé selon la revendication 10,
**caractérisé en ce**
**qu'**une forme inférieure de recouvrement de tôle (6) est réalisée en deux parties et laisse libre le canal (17).

12. Procédé selon l'une quelconque des revendications précédentes,
**caractérisé en ce**
**qu'**un logement de pièce de renfort (24) pousse contre une extrémité de la pièce de renfort (3) et qu'un espace intermédiaire (23) destiné à l'évacuation d'un gaz inerte est prévu entre le logement de pièce de renfort (24) et une forme de recouvrement de tôle (25, 26, 27).

13. Procédé selon la revendication 12,
**caractérisé en ce**
**que** des guidages latéraux, de préférence des plaquas latérales (21) constituées d'un matériau perméable au rayonnement infrarouge, sont prévus pour recevoir la forme de recouvrement de tôle (25, 26, 27) et le logement de pièce de renfort (24).

14. Procédé selon la revendication 13,
**caractérisé en ce**
**que** les guidages latéraux (21) délimitant latéralement l'espace intermédiaire (23).

15. Procédé selon l'une quelconque des revendications précédentes,
**caractérisé en ce**
**que** la forme de recouvrement de tôle comporte plusieurs plaques de recouvrement de tôle (25, 26, 27) superposées.

16. Procédé selon l'une quelconque des revendications précédentes,
**caractérisé en ce**
**qu'**une pression d'application de la pièce de renfort (3) contre la tôle (2) est générée par le poids d'un logement de pièce de renfort (24).

17. Procédé selon l'une quelconque des revendications 1 à 15,
**caractérisé en ce**
**qu'**une pression d'application de la pièce de renfort (3) contre la tôle (2) est générée par serrage d'un logement de pièce de renfort (9) contre une forme de recouvrement de tôle (5).

18. Procédé selon l'une quelconque des revendications précédentes,
**caractérisé en ce**
**qu'**une température de la tôle (2) et/ou de la pièce de renfort (3) est mesurée dans la zone de liaison.

19. Procédé selon la revendication 18,
**caractérisé en ce**
**qu'**est utilisé un thermocouple (20) qui est lu par l'intermédiaire d'une ligne (33).

20. Procédé selon la revendication 18 ou 19,
**caractérisé en ce**
**qu'**une intensité du rayonnement infrarouge diffusé est réglée en fonction de la température mesurée.

21. Procédé selon l'une quelconque des revendications précédentes,
**caractérisé en ce que** la tôle est perforée, de préférence microperforée.

22. Procédé selon l'une quelconque des revendications précédentes,
**caractérisé en ce**
**que** la tôle est une tôle extérieure (2) d'un empennage d'un avion ou une tôle d'aile d'un avion, et la pièce de renfort est un raidisseur (3).

23. Dispositif pour fabriquer un joint de pièce à usiner, notamment joint d'une tôle extérieure d'empennage avec un raidisseur, à l'aide d'un procédé selon l'une quelconque des revendications précédentes,
avec au moins deux formes de recouvrement de tôle (5, 6 ; 27, 28) constituées d'un matériau en grande partie perméable au rayonnement infrarouge,
avec au moins un logement de pièce de renfort (8, 9 ; 24), avec une zone dans laquelle une tôle (2) et une pièce de renfort (3) sont poussées l'une contre l'autre dans une zone de liaison (19) pourvue d'une soudure (7), et
avec au moins une source de rayonnement infrarouge (1, 12) par l'intermédiaire de laquelle un rayonnement infrarouge est diffusé sur la tôle (2) en passant par au moins une forme de recouvrement de tôle (5, 6).

24. Dispositif selon la revendication 23,
**caractérisé en ce**
**que** le logement de pièce de renfort (8, 9 ; 24) est également fabriqué dans un matériau en grande partie perméable au rayonnement infrarouge.
